**Europäisches Patentamt**

**European Patent Office**

**Office européen des brevets**

(19)

(11) Numéro de publication: **0 048 646**

**A1**

(12)

# DEMANDE DE BREVET EUROPEEN

(21) Numéro de dépôt: **81401338.9**

(22) Date de dépôt: **25.08.81**

(51) Int. Cl.³: **H 04 B 7/015**

(30) Priorité: **12.09.80 FR 8019742**

(43) Date de publication de la demande:
**31.03.82 Bulletin 82/13**

(84) Etats contractants désignés:
**DE GB IT**

(71) Demandeur: **THOMSON-CSF**
**173, Boulevard Haussmann**
**F-75360 Paris Cedex 08(FR)**

(72) Inventeur: **Maurel, Vincent**
**THOMSON-CSF-SCPI 173, bld Haussmann**
**F-75360 Paris Cedex 08(FR)**

(72) Inventeur: **de Place, Alain**
**THOMSON-CSF-SCPI 173, bld Haussmann**
**F-75360 Paris Cedex 08(FR)**

(72) Inventeur: **Gerard, Philippe**
**THOMSON-CSF-SCPI 173, bld Haussmann**
**F-75360 Paris Cedex(FR)**

(74) Mandataire: **Turlèque, Clotilde et al,**
**"THOMSON-CSF" - SCPI 173, bld Haussmann**
**F-75360 Paris Cedex 08(FR)**

(54) **Dispositif de correction des distorsions d'amplitude des signaux radioélectriques, et récepteur comportant un tel dispositif.**

(57) L'invention se rapporte à la correction des distorsions linéaires d'amplitude des signaux radioélectriques.

Elle a pour objet un dispositif de correction placé dans les étages à fréquence intermédiaire du récepteur, qui comporte un circuit correcteur (1) dont la structure est celle d'un filtre transverse à trois étages introduisant sur le signal d'entrée des retards 0, T/2 et T des atténuations a, $a_o$ et a, où a est variable, ce circuit correcteur réalisant une caractéristique amplitude-fréquence quasi-linéaire et un retard fixe T/2, sans variation de phase en fonction de la fréquence. Le signal de commande (C) appliqué à ce correcteur est obtenu par l'intermédiaire de deux filtres (7 et 8) à bandes étroites symétriques par rapport à la fréquence intermédiaire $f_o$, suivis de détecteurs (71 et 81) couplés aux entrées d'un comparateur (9) fournissant le signal de commande de correction.

L'invention est applicable, notamment, à la correction des affaiblissements sélectifs en fréquence des signaux numériques reçus par les récepteurs radioélectriques.

FIG_5

EP 0 048 646 A1

1

# DISPOSITIF DE CORRECTION DES DISTORSIONS D'AMPLITUDE
# DES SIGNAUX RADIOELECTRIQUES ET RECEPTEUR
# COMPORTANT UN TEL DISPOSITIF

L'invention se rapporte à un dispositif de corrrection des distorsions linéaires d'amplitude des signaux radioélectriques, en particulier les affaiblissements sélectifs en fréquence, et aux récepteurs radioélectriques comportant un tel dispositif.

Les liaisons radioélectriques sont soumises à des distorsions linéaires et en particulier à des affaiblissements de propagation, variables dans le temps, pouvant être sélectifs en fréquence, qu'il est nécessaire de corriger par un circuit auto-adaptatif pour que la courbe amplitude-fréquence du signal démodulé soit convenable, les distorsions d'amplitude du signal étant ainsi minimisées. Ce défaut est nettement perçu dans les transmissions radioélectriques de signaux numériques.

Il existe plusieurs types de dispositifs de correction applicables aux transmissions de signaux numériques.

Pour un premier type de dispositifs, la correction est effectuée en corrigeant le signal démodulé lui-même, soit par un circuit autoadaptatif tenant compte, pour l'appréciation de la valeur d'un bit, de l'amplitude du signal transmis par rapport à une amplitude de seuil fonction des états antérieurs et réactualisée à chaque instant, soit par un traitement du signal numérique démodulé par un filtre transverse ou récursif adaptatif. Les circuits correspondants sont complexes et entraînent donc une majoration de coût notable pour les récepteurs radioélectriques comportant de tels dispositifs de correction.

Pour un second type de dispositifs, la correction est obtenue par un traitement du signal à fréquence intermédiaire, avant démodulation. Pour ce type de correction, il est admis que le spectre du signal est symétrique par rapport à la fréquence centrale avant la transmission (ce qui est vrai en particulier pour les signaux numériques du fait de "l'embrouillage") et la détection d'amplitude dans deux bandes étroites de part et d'autre de la fréquence centrale permet, en approximant le défaut par une loi linéaire, de le corriger par un circuit correcteur variable dont la caractéristique amplitude-fréquence, linéaire, a une pente variable inverse de celle qui caractérise le défaut détecté.

Un tel dispositif est décrit par exemple dans la demande de brevet français n° 2 374 784 au nom de la Demanderesse.

Un tel traitement, avec un circuit correcteur de caractéristique amplitude fréquence linéaire, introduit, en même temps que les variations d'amplitude souhaitées, des variations de phase qui sont liées aux premières.

Or, si le canal de transmission introduit, en plus des distorsions d'amplitude, des distorsions de phase, ces deux types de distorsions ne sont pas liés par une relation déterministe. Si, en même temps que la loi de correction d'amplitude, une loi de variation de phase qui lui est liée, affecte également le signal, il est possible que le résultat de cette correction, soit en même temps qu'une correction de la caractéristique amplitude-fréquence, une dégradation de la caractéristique phase-fréquence.

L'objet de l'invention est un dispositif de correction du deuxième type, c'est-à-dire réalisant une correction en fréquence intermédiaire pour des signaux radioélectriques dont le spectre est normalement symétrique par rapport à la fréquence centrale, lors de l'émission, qui ne présente pas l'inconvénient mentionné ci-dessus, c'est-à-dire qui ne modifie pas la phase du signal.

Suivant l'invention, un dispositif de correction des distorsions d'amplitude de signaux radioélectriques comportant une entrée à fréquence intermédiaire couplée à l'entrée d'au moins un circuit correcteur, ce circuit comportant en outre une sortie couplée à la sortie à fréquence intermédiaire du dispositif par un amplificateur, et une entrée de commande de correction, le dispositif comportant en outre un circuit de commande de correction ayant une entrée recevant un signal à fréquence intermédiaire et une sortie couplée à l'entrée de commande de correction, est principalement caractérisé en ce que le circuit correcteur a une structure de filtre transverse à trois étages et comporte à cet effet trois voies, dont les entrées sont reliées à l'entrée du circuit, introduisant respectivement un retard T et une atténuation variable $\underline{a}$ pour la

première, un retard $\frac{T}{2}$ et une atténuation $a_o$ fixe pour la seconde, et une atténuation variable $\underline{a}$ pour la troisième, T étant un paramètre fonction de la fréquence intermédiaire, $f_o$, les signaux issus de ces trois voies étant additionnés pour délivrer le signal corrigé à la sortie du circuit, la valeur de $\underline{a}$ étant commandée par le signal de commande de correction.

L'invention sera mieux comprise et d'autres caractéristiques apparaîtront à l'aide de la description qui suit en référence aux figures annnexées.

La figure 1 représente un schéma synoptique d'un mode de réalisation du circuit correcteur variable, utilisé dans le dispositif de correction selon l'invention.

La figure 2 représente la fonction de transfert de ce circuit correcteur pour plusieurs valeurs du paramètre variable.

La figure 3 représente le schéma synoptique d'un mode de réalisation préféré du circuit correcteur variable utilisé dans le dispositif de correction selon l'invention.

La figure 4 est un schéma détaillé d'un circuit correcteur.

La figure 5 est un schéma synoptique du dispositif de correction suivant l'invention.

La figure 6 représente des courbes illustrant le défaut à corriger.

Comme indiqué ci-dessus, le circuit correcteur doit avoir, dans la bande de fréquences, une caractéristique amplitude-fréquence sensiblement linéaire, avec une pente variable et ne doit pas modifier la phase du signal en fonction de la fréquence dans cette bande de fréquences.

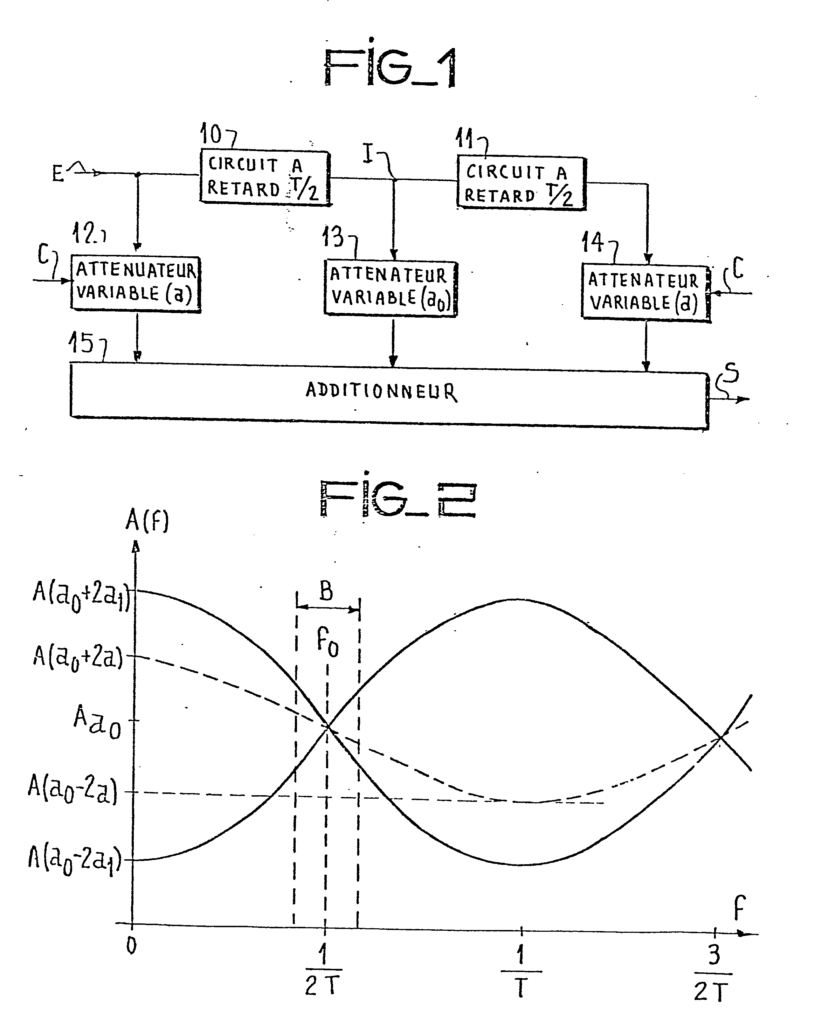

Pour cela, le circuit correcteur est du type filtre transverse à trois étages. Le schéma synoptique d'un tel filtre est représenté sur la figure 1. Il comporte une entrée de signal E, deux circuits à retard pur, en série 10 et 11 et trois atténuateurs 12, 13 et 14 dont les entrées sont respectivement reliées à l'entrée E, au point commun I aux deux circuits à retard 10 et 11, et à la sortie du second circuit à retard 11. Les sorties de ces trois atténuateurs sont reliées aux entrées d'un sommateur 15 dont la sortie est la sortie S du circuit correcteur.

Les deux circuits à retard introduisent des retards fixes égaux à $\frac{T}{2}$ sur les signaux qu'ils reçoivent.

Les coefficients d'atténuation des atténuateurs 12 et 14 sont égaux à $\underline{a}$ et variables simultanément dans le même sens par l'intermé-

diaire d'un signal de commande appliqué à leurs entrées de commande ; le coefficient d'atténuation de l'atténuateur 13 est fixe et égal à $a_o$ ; un signal à la fréquence f, d'amplitude A à l'entrée de ce circuit, se transforme en un signal à la même fréquence non déphasé et seulement retardé de $\frac{T}{2}$ , d'amplitude $(2a\cos \pi fT + a_o)A$.

La réponse d'un tel circuit en fonction de la fréquence, A(f), est représentée sur la figure 2. Elle est sinusoïdale, autour d'une amplitude moyenne $a_o A$, les zéros de cette variation sinusoïdale étant aux fréquences f telles que : $f = \frac{2k+1}{2T}$ , k entier positif ou nul, et il n'y a pas de variation de phase du signal en fonction de la fréquence.

Si la bande B du signal transmis est inférieure à $\frac{1}{T}$ et si la durée T est choisie en fonction de la fréquence centrale $f_o$ de la bande telle que $T = \frac{2k+1}{2f_o}$ , par exemple avec k = 0 , $f_o = \frac{1}{2T}$ , alors la réponse du circuit correcteur est assimilable à une réponse linéaire de pente $2a\pi T$. Si $\underline{a}$ est variable par réglage entre $- a_1$ et $+ a_1$ , la pente de la réponse amplitude fréquence du circuit correcteur varie en $- 2a_1 \pi T$ et $+ 2a_1 \pi T$ , l'amplitude à la fréquence centrale $f_o$ étant constante et égale à $a_o A$. Les amplitudes aux fréquences $f_o - \frac{B}{2}$ et $f_o + \frac{B}{2}$ sont respectivement égales à $(a_o + 2a \sin \frac{BT}{2})A$ et $(a_o - 2a \sin \pi \frac{BT}{2})A$, et leur rapport est égal à

$$\frac{1 + \frac{2a}{a_o} \sin \pi \frac{BT}{2}}{1 - \frac{2a}{a_o} \sin \pi \frac{BT}{2}}$$

A titre d'exemple, pour $B = \frac{1}{6T}$ (si $f_o$ = 140MHz et B = 47 MHz) et pour $a = 2a_o$ , la pente globale entre les fréquences extrêmes de la bande de fréquences est de l'ordre de 10dB.

Un tel circuit correcteur peut donc compenser une distorsion d'amplitude du premier ordre (linéaire) de la fonction de transfert amplitude-fréquence sans altérer la phase.

En pratique la structure classique du filtre transverse à trois étages représentée sur la figure 1 n'est pas parfaitement adaptée car il est difficile de garantir, par deux atténuateurs distincts, des coefficients d'atténuation exactement égaux lors des variations effectuées pour la correction.

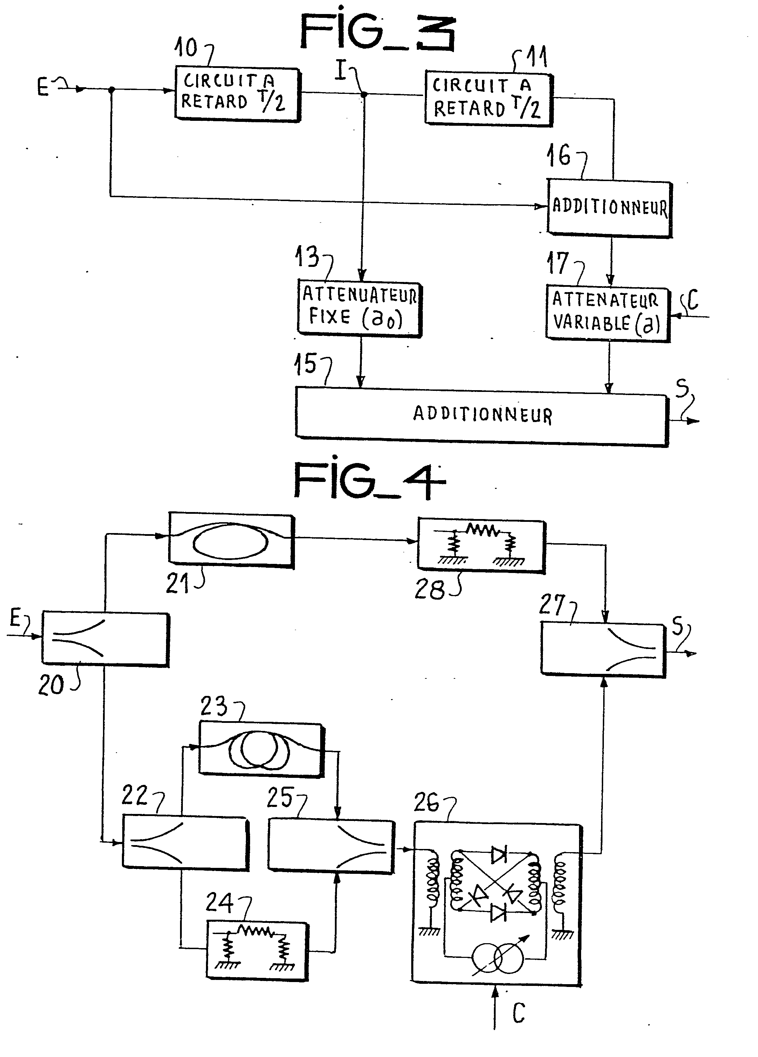

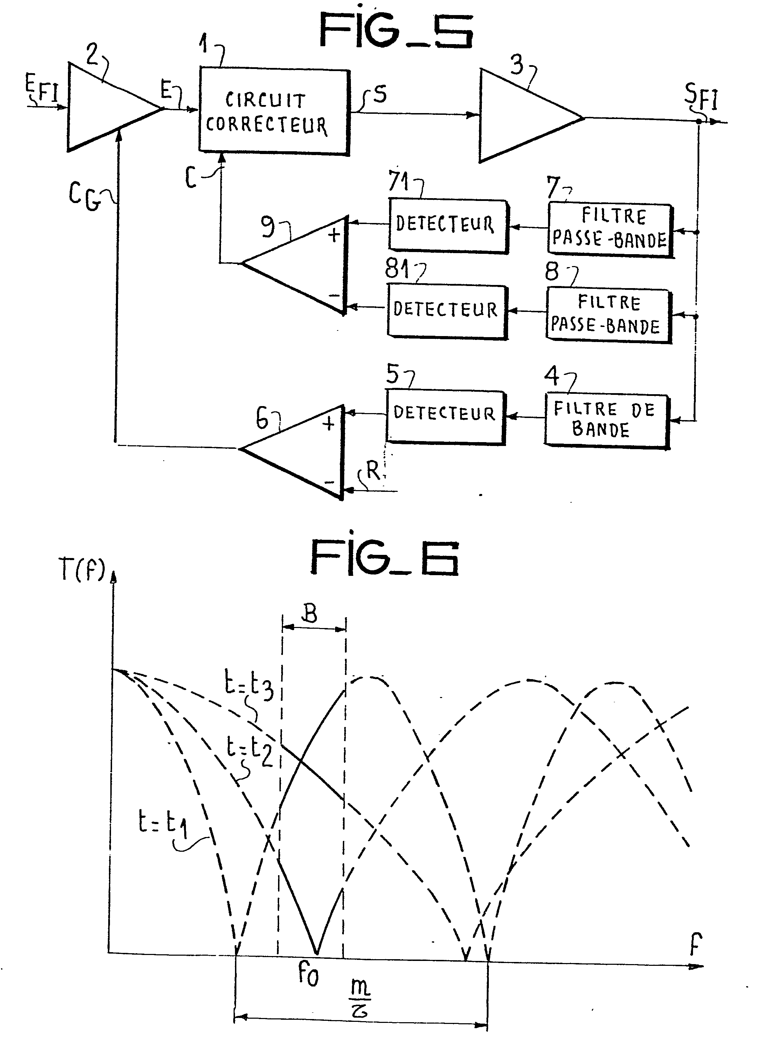

La figure 3 représente le schéma synoptique et la figure 4 un schéma détaillé d'un mode de réalisation préféré du circuit correcteur utilisé dans le dispositif de correction selon l'invention. Sur ces figures les mêmes éléments que sur la figure 1 ont été désignés par les mêmes repères. Dans ce circuit, le signal non retardé présent sur l'entrée E et le signal retardé de T sont additionnés avant atténuation variable, un seul atténuateur variable d'atténuation a comprise entre $-a_1$ et $+a_1$ étant alors nécessaire. Le circuit comporte à partir de l'entrée de signal E, les deux circuits à retard pur 10 et 11 en série. Comme dans le premier mode de réalisation, le point commun 1 aux deux circuits à retard est relié à l'entrée de l'atténuateur fixe 13 de coefficient d'atténuation $a_o$. Mais l'entrée E et la sortie du circuit à retard 11 sont reliées à un additionneur supplémentaire 16, dont la sortie est reliée à l'entrée d'un atténuateur variable unique 17 qui a alors la même fonction que les atténuateurs 12 et 14 du premier circuit. Les sorties des atténuateurs 13 et 17 sont alors reliées à l'additionneur de sortie, 15 dont la sortie S est la sortie du circuit correcteur.

Dans les deux modes de réalisation du circuit correcteur décrits en référence aux figures 1 et 3, une variante consiste à utiliser au lieu des deux circuits à retard de retard $\frac{T}{2}$ en série, deux circuits à retard dont les entrées sont reliées à l'entrée 3, l'un de retard $\frac{T}{2}$ dont la sortie est reliée à l'atténuateur fixe 13, l'autre de retard T dont la sortie est reliée à l'atténuateur variable 14 dans le cas de la figure 1, soit à l'additionneur 16 dans le cas de la figure 2.

La figure 4 représente un peu plus en détails le mode de réalisation préféré du circuit correcteur avec un seul atténuateur variable, dans la deuxième variante, comportant un circuit à retard T et un circuit à retard $\frac{T}{2}$.

L'entrée est reliée à un accès d'un coupleur 3dB, 20, utilisé en séparateur. Les deux accès de sortie de ce coupleur sont respectivement reliés à l'entrée d'une ligne coaxiale souple 21 de longueur $l_1$ et à un accès d'un second coupleur, 3dB, 22, également utilisé en séparateur. Les accès de sortie de ce second coupleur sont respectivement reliés à l'entrée d'une seconde ligne coaxiale souple, 23, de longueur $l_2$ et à l'entrée d'un atténuateur de compensation à résistance, 24, dont l'atténuation est ajustée pour être égale à l'atténuation (faible) introduite par la ligne coaxiale 23 (de l'ordre de 0,2dB à 0,5dB).

Les sorties de la ligne 23 et de l'atténuateur 24 sont reliées aux deux entrées d'un coupleur 3dB, 25, monté en additionneur dont la sortie somme est reliée à l'entrée d'un modulateur en anneau à diodes PIN, 26, utilisé en atténuateur variable, le signal de commande variable C agissant sur le courant de polarisation des diodes du modulateur.

La sortie de ce modulateur est reliée à un accès d'un autre coupleur 3dB, 27, monté en additionneur, l'autre accès de ce coupleur 27 étant couplé à la sortie de la ligne coaxiale 21 par l'intermédiaire d'un atténuateur à résistances, 28, destiné à introduire dans la voie retardée de $\frac{T}{2}$, l'atténuation fixe $a_o$ et une atténuation supplémentaire destinée à égaler celle introduite par les coupleurs et la ligne coaxiale dans la voie comportant l'atténuateur variable.

L'utilisation dans ce circuit, d'un modulateur en anneau comme atténuateur variable est intéressante car il est possible de réaliser ainsi une commande directe, par un signal d'erreur positif ou négatif, du coefficient d'atténuation pour faire varier la pente du correcteur entre des valeurs positives et des valeurs négatives. L'utilisation dans ce modulateur de diodes PIN permet d'éviter la génération d'harmoniques.

Un tel circuit correcteur peut donc être inséré simplement dans les étages à fréquence intermédiaire d'une station de réception, comme le montre le schéma de la figure 5 qui représente le mode de réalisation le plus simple du dispositif de correction suivant l'invention.

Dans le dispositif de correction représenté sur cette figure, le circuit correcteur 1, réalisé suivant l'un des modes de réalisation décrits ci-dessus, a son entrée E couplée à l'entrée de signal à fréquence intermédiaire $E_{FI}$ par l'intermédiaire d'un amplificateur de réception FI à gain variable 2, comportant une entrée de commande de gain $G_C$.

La sortie S du circuit correcteur est reliée à l'entrée d'un amplificateur 3 compensant par son amplification, l'atténuation introduite à la fréquence centrale $f_o$ par le circuit correcteur 1.

Cette atténuation fixe $a_o$ est fonction de la pente maximale de correction désirée dans la bande du signal, de la bande du signal, des pertes introduites par les coupleurs, et de l'affaiblissement minimal de l'atténuateur variable qui s'ajoute à l'atténuation fixe. Le réglage du coefficient d'amplification par l'amplificateur 3 est effectué définitivement. La sortie de cet amplificateur est la sortie de l'étage à fréquence intermédiaire $S_{FI}$.

Cette sortie $S_{FI}$ est couplée à l'entrée de commande automatique de gain, $G_C$, de l'amplificateur 2, par un filtre de bande, 4, du signal en FI, relié à un détecteur, 5, dont la sortie est reliée à la première entrée d'un comparateur, 6, la seconde entrée de ce comparateur recevant un signal de référence R fixant le niveau moyen du signal à la sortie $S_{FI}$ par commande du gain de l'amplificateur 2.

Par ailleurs, pour la commande du circuit correcteur 1, le dispositif comporte deux filtres passe bande très sélectifs, ayant une bande de quelques MHz, 7 et 8, dont les fréquences centrales sont symétriques par rapport à la fréquence centrale $f_o$ de la bande à fréquence intermédiaire du signal reçu. Deux détecteurs 71 et 81, qui détectent les niveaux du signal dans ces deux bandes étroites symétriques par rapport à $f_o$, ont leurs sorties reliées aux entrées d'un comparateur 9. La sortie de ce comparateur, qui fournit un signal de commande fonction de la différence de ces niveaux détectés, est reliée à l'entrée de commande C du circuit correcteur 1. La structure décrite est une commande en contre réaction par un signal d'erreur indiquant la pente résiduelle positive ou négative, à ajouter pour que la correction soit complète. Il est également possible d'effectuer la commande a priori en branchant les filtres 7 et 8 non plus à la sortie $S_{FI}$ mais à la sortie de l'amplificateur 2 de commande automatique de gain.

Au lieu d'utiliser un seul circuit correcteur pour couvrir toute la gamme de correction (par exemple, si la pente maximale à corriger est $^{\pm}12dB$ entre $- B/2$ et $+ B/2$, un circuit correcteur dont la pente pourrait varier de $- 12$ dB à $+ 12dB$ dans cette bande), il est possible d'associer plusieurs circuits correcteurs semblables à celui décrit, ces circuits pouvant avoir des paramètres T égaux ou différents.

Par exemple, il est possible d'associer deux circuits correcteurs, l'un mis en service lorsque la pente à donner au correcteur est positive (entre 0 et + 12dB), l'autre mis en service lorsque la pente à donner au correcteur est négative (entre $- 12dB$ et 0).

Il est aussi possible d'associer plusieurs correcteurs en série, introduisant chacun une correction de pente plus faible que celle qui serait nécessitée par un seul correcteur effectuant toute la correction par exemple un premier circuit de pente variable entre 0 et $\pm$ 6dB et un second circuit ayant également une pente comprise entre 0 et $\pm$ 6dB, les deux circuits ayant le même paramètre T et étant toujours réglés de la même manière pour introduire chacun la moitié de la correction nécessaire.

D'autres associations peuvent être utilisées, sans sortir du cadre de l'invention pour augmenter la dynamique ou la linéarité des lois de variation amplitude fréquence réalisables, par exemple en associant plusieurs circuits correcteurs ayant des paramètres T différents.

La figure 6 représente une évolution possible dans le temps de la fonction de transfert T(f) de la liaison radioélectrique : pour un signal de bande B autour de $f_o$, à l'instant $t = t_1$ la pente à corriger est positive, à l'instant $t = t_2$ il y a un évanouissement profond et à l'instant $t = t_3$ la pente à corriger est devenue positive. Ce type de fonction correspond à un modèle de propagation à deux trajets. La largeur des lobes, $\Delta f = \frac{m}{\tau}$, de cette fonction de transfert est inversement proportionnelle au retard $\tau$ existant entre ces deux trajets. Le correcteur utilisé pour corriger ce défaut introduit aux instants $t_1$ et $t_3$ respectivement des corrections par pentes négative et positive en fonction de la fréquence. Par contre la situation représentée pour $t = t_2$ n'est pas corrigible car non assimilable à un phénomène quasi linéaire.

Un tel système correcteur permet cependant de réduire dans un rapport 1 à 5 la durée pendant laquelle le récepteur n'est pas en mesure d'évaluer le signal transmis.

On sait que pour réduire encore cette durée de trous due aux distorsions, il est possible d'utiliser un récepteur fonctionnant en diversité (d'espace ou de fréquence). En effet, si le même signal est reçu non plus par une seule antenne mais par deux antennes dans un système fonctionnant en diversité d'espace, la caractéristique de transfert T'(f) pour la seconde antenne sera très probablement différente de celle de la première à un instant $t_o$, en conséquence, dans un récepteur associant un système de diversité au circuit correcteur selon l'invention, la durée des trous est très réduite car les plages de correction étant grandes, la probabilité pour que les signaux reçus par les deux antennes aient simultanément un affaiblissement maximal devient très faible.

L'invention n'est pas limitée aux modes de réalisation précisément décrits et représentés. En particulier, dans des dispositifs de correction comportant, en association, plusieurs circuits de correction tels que décrits ci-dessus, il est possible d'utiliser d'autres types d'atténuateurs variables que des modulateurs en anneaux à diodes PIN, surtout si chaque circuit correcteur est destiné à n'introduire que des variations de pentes positives (ou négatives).

Par ailleurs, il a été dit ci-dessus qu'en choisissant le paramètre T en fonction de la fréquence intermédiaire égal à $\dfrac{2k+1}{2f_0}$, la caractéristique de transfert du circuit correcteur est quasi linéaire et permet donc de corriger les distorsions linéaires. Il est également possible en choisissant convenablement le paramètre T en fonction de la fréquence intermédiaire de choisir une autre portion de la sinusoïde représentée sur la figure 2 de façon à corriger des distorsions d'amplitude faisant apparaître une incurvation, dans un sens déterminé, de la fonction de transfert T(f) de la liaison.

Enfin, si le besoin d'un tel dispositif de correction est plus nettement perçu pour les transmissions radioélectriques de signaux numériques, le même dispositif peut être utilisé pour corriger des distorsions d'amplitude pour des transmissions analogiques. Les filtres qui détectent la pente globale introduite dans la bande du signal par le canal de transmission ont des bandes qui coïncident alors avec la première paire de bandes latérales symétriques du signal modulé par la fréquence de l'onde pilote la plus élevée du signal en bande de base de manière à avoir un signal de valeur constante quelle que soit la charge de la liaison.

10

## REVENDICATIONS

1. Dispositif de correction des distorsions d'amplitude de signaux radioélectriques comportant une entrée ($E_{FI}$) à fréquence intermédiaire couplée à l'entrée (E) d'au moins un circuit correcteur (1), ce circuit comportant en outre une sortie (S) couplée à la sortie à fréquence intermédiaire ($S_{FI}$) du dispositif par un amplificateur (3), et une entrée de commande de correction (C), le dispositif comportant en outre un circuit de commande de correction ayant une entrée recevant un signal à fréquence intermédiaire et une sortie couplée à l'entrée de commande de correction, caractérisé en ce que le circuit correcteur a une structure de filtre transverse à trois étages et comporte à cet effet trois voies, dont les entrées sont reliées à l'entrée (E) du circuit, introduisant respectivement un retard T et une atténuation $\underline{a}$ variable pour la première, un retard $\frac{T}{2}$ et une atténuation fixe $a_o$ pour la seconde, et une atténuation $\underline{a}$ variable pour la troisième, T étant un paramètre fonction de la fréquence intermédiaire, $f_o$, les signaux issus de ces trois voies étant additionnés pour délivrer le signal corrigé à la sortie (S) du circuit, la valeur de $\underline{a}$ étant commandée par le signal de commande de correction.

2. Dispositif selon la revendication 1, caractérisé en ce que la première et la troisième voie comportent un atténuateur variable commun (17), l'entrée de la troisième voie et l'entrée retardée de T de la première voie étant reliées à un sommateur (16) dont la sortie est reliée à l'entrée de l'atténuateur variable commun (17), la sortie de cet atténuateur étant reliée à une entrée d'un sommateur de sortie (15) dont l'autre entrée reçoit le signal retardé de $\frac{T}{2}$ et atténué par un atténuateur fixe (13) de la seconde voie.

3. Dispositif selon l'une des revendications précédentes, caractérisé en ce que, pour réaliser l'atténuation variable de coefficient $\underline{a}$, le circuit comporte au moins un atténuateur variable constitué d'un modulateur en anneau à diodes PIN, l'entrée de commande de correction (C) du circuit correcteur agissant sur le courant de polarisation des diodes du modulateur.

4. Dispositif selon l'une quelconque des revendications précédentes, caractérisé en ce que, pour la correction de distorsions linéaires, le paramètre T fixant les retards introduits dans les voies du circuit correcteur est égal à $\frac{2k+1}{2f_o}$, où k est un entier positif ou nul.

5. Dispositif selon l'une quelconque des revendications précédentes, caractérisé en ce que les première et deuxième voies comportent, pour introduire les retards, des longueurs déterminées de ligne coaxiale et, aux entrées ou sorties des voies pour réaliser les séparations et les additions de signaux, des coupleurs à 3dB.

6. Dispositif selon l'une quelconque des revendications précédentes, caractérisé én ce que plusieurs circuits correcteurs sont associés pour ajuster la caractéristique globale de la correction à la caractéristique de transfert de la liaison dans la bande de fréquence transmise.

7. Dispositif selon l'une quelconque des revendications précédentes, caractérisé en ce que le circuit de commande de correction comporte deux filtres (7, 8) à bandes étroites symétriques par rapport à la fréquence centrale $f_0$ de la bande du signal à fréquence intermédiaire, traitant un signal à fréquence intermédiaire, suivis chacun d'un détecteur (71, 81), les sorties des détecteurs étant reliées aux entrées d'un comparateur (9) dont la sortie, fournissant un signal caractéristique de la distorsion, est couplée à l'entrée de commande de correction (C).

8. Dispositif selon la revendication 7, caractérisé en ce que, la correction est obtenue par une boucle de réaction, les filtres (7 et 8) étant couplés à la sortie à fréquence intermédiaire ($S_{FI}$) du dispositif.

9. Dispositif selon la revendication 7, caractérisé en ce que la correction est directe, les filtres (7 et 8) étant couplés à l'entrée du circuit correcteur.

10. Récepteur de signaux radioélectriques, caractérisé en ce qu'il comporte un dispositif de correction des distorsions selon l'une quelconque des revendications précédentes, et une boucle de commande automatique de gain prélevant le signal à la sortie à fréquence intermédiaire du dispositif et agissant sur l'amplificateur (3) à fréquence intermédiaire pour maintenir constant le niveau moyen à la sortie $S_{FI}$ .

# FIG_1

E → 10 CIRCUIT A RETARD T/2 → I → 11 CIRCUIT A RETARD T/2

C → 12 ATTENUATEUR VARIABLE (a)

13 ATTENATEUR VARIABLE (a₀)

14 ATTENATEUR VARIABLE (a) ← C

15 ADDITIONNEUR → S

# FIG_2

$A(f)$

$A(a_0+2a_1)$

$A(a_0+2a)$

$Aa_0$

$A(a_0-2a)$

$A(a_0-2a_1)$

B

$f_0$

$0$  $\dfrac{1}{2T}$  $\dfrac{1}{T}$  $\dfrac{3}{2T}$

$f$

FIG_3

CIRCUIT A RETARD $T/2$ (10)

CIRCUIT A RETARD $T/2$ (11)

ADDITIONNEUR (16)

ATTENUATEUR FIXE ($a_0$) (13)

ATTENATEUR VARIABLE ($a$) (17)

ADDITIONNEUR (15)

FIG_4

# FIG_5

# FIG_6

# 0048646

Numéro de la demande

**Office européen des brevets**

## RAPPORT DE RECHERCHE EUROPEENNE

EP 81 40 1338

| | DOCUMENTS CONSIDERES COMME PERTINENTS | | CLASSEMENT DE LA DEMANDE (Int. Cl.³) |
|---|---|---|---|
| Categorie | Citation du document avec indication, en cas de besoin, des parties pertinentes | Revendication concernée | |
| | US - A - 3 372 350 (TAKESHI KA-WAHASHI)<br><br>* Colonne 1, lignes 12-21, colonne 3, lignes 6-9; colonne 4, lignes 46-62; figures 1,3(a) *<br><br>-- | 1,5 | H 04 B 7/015 |
| | US - A - 3 706 054 (A.T. STARR et al.)<br><br>* Colonne 6, ligne 73 - colonne 7, ligne 5; figures 9 (A), 9(B) *<br><br>-- | 1,6 | **DOMAINES TECHNIQUES RECHERCHES (Int. Cl.³)** |
| | US - A - 3 560 855 (H.C. SCHROEDER)<br><br>* Colonne 5, lignes 72-74; colonne 6, ligne 60 - colonne 7, ligne 14; figure 2 *<br><br>-- | 1,10 | H 04 B 7/015<br>H 04 L 27/00<br>25/03 |
| | PROCEEDINGS OF THE INTERNATIONAL ZURICH SEMINAR ON DIGITAL COMMUNICATION, DIGITAL TRANSMISSION IN WIRELESS SYSTEMS, 4-6 mars 1980, Zürich, IEEE Catalog no. 80 CH 1521 - 4 COM, 1980, IEEE New York, US<br>A. CASTEL et al.: "Equalization of radiolink channels with multipath propagation. Theoretical and experimental results", pages G8-.1-G8-6<br><br>* Figure 7 *<br><br>-- | 3 | |
| | US - A - 4 064 422 (R.J. MASAK)<br><br>* Colonne 1, lignes 60-62; figure 2 *<br>    --    ./. | 5 | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

Le present rapport de recherche a eté établi pour toutes les revendications

| Lieu de la recherche | Date d'achevement de la recherche | Examinateur |
|---|---|---|
| La Haye | 17-12-1981 | STRASSEN |

OEB Form 1503.1   06.78

**Office européen des brevets**

**RAPPORT DE RECHERCHE EUROPEENNE**

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| D | FR - A - 2 374 784 (THOMSON-CSF)<br><br>* Page 2, ligne 9 - page 3, ligne 21; page 5, lignes 9-17; figures 1,2 *<br><br>- - - - | 1,7,8 9 | |
| | | | **DOMAINES TECHNIQUES RECHERCHES (Int. Cl. 3)** |

OEB Form 1503.2   06.78